# EUROPÄISCHE PATENTSCHRIFT

(11) **EP 2 280 239 B1**
(45) Veröffentlichungstag und Bekanntmachung des Hinweises auf die Patenterteilung: **22.06.2011**
(21) Anmeldenummer: 09166515.8
(22) Anmeldetag: 27.07.2009
(51) Int. Cl.: G01B 11/25

(54) **Beleuchtungsvorrichtung zur Beleuchtung eines Überwachungsbereichs**
Illumination device for illuminating a monitored area
Dispositif d'éclairage pour l'éclairage d'une zone de surveillance

(43) Veröffentlichungstag der Anmeldung: 02.02.2011
(73) Patentinhaber: SICK AG, 79183 Waldkirch (DE)
(72) Erfinder: Hammes, Dr. Markus, 79104 Freiburg (DE); Schmitz, Dr. Stephan, 79108 Freiburg (DE); Braune, Ingolf, 79194 Gundelfingen (DE); Collischon, Dr. Martin, 90547 Stein (DE)
(74) Vertreter: Hehl, Ulrich

(56) Entgegenhaltungen:
- EP-A- 1 933 167
- DE-B3-102006 001 634
- DE-U1-202007 010 884
- JP-A- 60 242 419

## Beschreibung

Die Erfindung betrifft eine Beleuchtungsvorrichtung und ein Verfahren zur Beleuchtung eines Überwachungsbereichs nach dem Oberbegriff von Anspruch 1 beziehungsweise 10.

Seit langem werden Kameras zur Überwachung eingesetzt und finden zunehmend auch Anwendung in der Sicherheitstechnik. Eine typische sicherheitstechnische Anwendung ist die Absicherung einer gefährlichen Maschine, wie etwa einer Presse oder eines Roboters, wo bei Eingriff eines Körperteils in einen Gefahrenbereich um die Maschine herum eine Absicherung erfolgt. Dies kann je nach Situation die Abschaltung der Maschine oder das Verbringen in eine sichere Position sein.

Besonders hohe Anforderungen stellen dreidimensionale Überwachungsverfahren, die auf Stereoskopie beruhen. Dabei werden Bilder der Szenerie aus leicht unterschiedlichen Perspektiven gewonnen. In den überlappenden Bildbereichen werden gleiche Strukturen identifiziert und aus der Disparität und den optischen Parametern des Kamerasystems mittels Triangulation Entfernungen und somit ein dreidimensionales Bild beziehungsweise eine Tiefenkarte berechnet.

Stereoskopische Kamerasysteme bieten gegenüber herkömmlichen sicherheitstechnischen Sensoren wie Scannern und Lichtgittern den Vorteil, flächendeckend Tiefeninformationen aus einer zweidimensional aufgenommenen Beobachtungsszenerie zu ermitteln. Mit Hilfe der Tiefeninformationen können in sicherheitstechnischen Anwendungen Schutzbereiche variabler und genauer festgelegt und mehr und genauere Klassen von erlaubten Objektbewegungen unterschieden werden, also beispielsweise Bewegungen des Roboters selbst oder Vorbeibewegungen eines Körperteils an der gefährlichen Maschine in einer unterschiedlichen Tiefenebene, die an sich völlig ungefährlich ist, aber von einer zweidimensionalen Kamera nicht differenziert werden kann. Im Rahmen der Sicherheitstechnik besteht jedoch für eine zuverlässige Sicherheitsfunktion über das sichere Erkennen eines Eingriffs in den bereitgestellten Bilddaten der zusätzliche Anspruch, diese dreidimensionalen Bilddaten in Form einer dichten Tiefenkarte zu erzeugen, also einen zuverlässigen Abstandswert für jeden Bildbereich und bevorzugt nahezu jeden Bildpunkt verfügbar zu haben.

Große strukturlose Flächen oder zueinander ähnliche Strukturmerkmale können eine eindeutige Zuordnung von Bildbereichen beim Auffinden der Korrespondenzen zwischen den Strukturelementen der Bilder verhindern. Dabei sind zumindest zwei Arten von Fehlern denkbar, nämlich ein Scheitern des Auffindens einander entsprechender Strukturelemente oder eine fehlerhafte Zuordnung. Die Folge sind Lücken in den dreidimensionalen Bildern oder fehlerhafte Berechnungen der Entfernungen. Beides ist für sicherheitstechnische Anwendungen höchst gefährlich, da ein unzulässiger Eingriff unerkannt bleiben oder eine falsche Entfernung zugeordnet werden könnte. Die Abschaltung der Gefährdungsquelle unterbleibt dann möglicherweise, weil der Eingriff fehlerhaft als unkritisch eingestuft wird.

Aktive Stereomesssysteme verwenden deshalb zusätzlich zu dem Empfangssystem, also im Wesentlichen zwei zueinander kalibrierten Kameras, eine Beleuchtungseinheit, deren Funktion ist, die beobachtete Szenerie mit strukturiertem Licht zu beleuchten und so durch die zahlreichen Hell-Dunkel-Übergänge in den Bildern Merkmale zu erzeugen, anhand derer der Stereoalgorithmus zuverlässige und dichte Abstandsdaten aus der Szenerie extrahieren kann. Solche Muster können auch selbstunähnlich sein, also für die vorliegenden Überwachungen in erster Linie keine bezüglich Verschiebungen zueinander symmetrischen Bereiche aufweisen.

Herkömmlich werden Beleuchtungseinheiten mit Projektionstechniken ähnlich einem Diaprojektor oder auf Basis diffraktiver optischer Elemente (DOE) als Mustergeneratoren vorgeschlagen. Lichtverluste in dem Projektor, beispielsweise in einem Dia, werden in Kauf genommen. Die erforderliche hohe Lichtleistung liefern Halogenlampen, die relativ kurzlebig sind. Halbleiterlichtquellen dagegen sind langlebig und erleichtern gegenüber breitbandigen konventionellen Lampen die Überwachungsaufgabe, denn das definierte schmale Frequenzspektrum ihres Nutzlichts ist durch optische Filter von Umgebungslicht unterscheidbar.

Um auch mit Halbleiterlichtquellen hohe Lichtleistungen zu erreichen, können Hochleistungs-LEDs oder Hochleistungslaser verwendet werden. Als Einzellichtquelle (Single Emitter) mit Leistungen beispielsweise oberhalb von 10 Watt oder noch mehr sind sie aber kostenaufwändig. Laserbarren dagegen liefern kostengünstig die erforderliche Lichtleistung. Ihr Beleuchtungsfeld und ihre Intensitätsverteilung entspricht jedoch mit bekannten Optiken nicht den Anforderungen an eine gleichmäßige Ausleuchtung eines Überwachungsbereichs. Deshalb finden Laserbarren in herkömmlichen Projektoren keine Verwendung, sondern Projektoren werden mit konventionellen Lampen oder LEDs betrieben. Für viele Projektionsanwendungen ist die Kohärenz einer Laserlichtquelle sogar unerwünscht, da sie zu Störeffekten im projizierten Bild führt.

Es ist bekannt, Licht von Laserbarren mittels Faserkopplung oder in einem Wabenkondensor zu einem gewünschten Beleuchtungsfeld zu formen und zu homogenisieren. Dabei allerdings wird das Licht nicht nur umverteilt, sondern gemischt. Deshalb bleibt die Kohärenz nicht hinreichend erhalten. Sofern die Beleuchtungsvorrichtung anders als ein üblicher Projektor ein Mustererzeugungselement enthält, welches auf die Kohärenz angewiesen ist, sind solche Lichtquellen ungeeignet.

Aus der EP 1 933 167 A2 ist ein optoelektronischer Sensor zur Abstandsbestimmung eines Objekts mit einer Beleuchtungseinheit bekannt, die einen Laserstack und ein DOE aufweist, um ein regelmäßiges Punktmuster zu erzeugen. Es sind aber keinerlei Maßnahmen offenbart, um das Beleuchtungsfeld des Laserstacks zu formen.

In der EP 1 742 168 A1 wird die Beleuchtungslinie eines kamerabasierten Codelesers mittels einer Vielzahl zu einer Reihe angeordneter LEDs erzeugt. Um eine gute Homogenität zu erreichen, ist jeder LED eine Linse zugeordnet, die über einen Versatz gegenüber der optischen Achse der LED, eine Variation des Scheitelabstands oder Keilflächen eine gewünschte Überlagerung der einzelnen LEDs erreichen. Die Beleuchtungslinie ist jedoch für flächige Überwachungsaufgaben ungeeignet.

Die US 5,139,609 ist ein Beispiel für den Einsatz von Mikrolinsenfeldern mit Laserbarren, hier verwendet zum Pumpen eines Festkörperlasers. Solche herkömmlichen Mikrolinsenfelder liefern keine rechteckigen Beleuchtungsfelder, die zur Beleuchtung für einen Kamerasensor verwendet werden könnten.

Aus der JP 60242419 A ist bekannt, ein Linsenfeld und ein Prismenfeld zu einem integralen Prismen-Linsenfeld zusammenzusetzen. Dabei sind die Prismen untereinander identisch und zueinander parallel ausgerichtet.

Aus der US2006/0209310 A1 ist ein optisches Beleuchtungssystem für die Erzeugung einer Beleuchtungslinie bekannt, mit dem besonders lange und schmale Linien erreichbar sind. In einer Ausführungsform werden mit Hilfe von verstellbaren Keilen mehrere einzelnen Beleuchtungslinien in einer Querrichtung leicht gegeneinander verschoben, um eine Homogenisierung der insgesamt resultierenden Beleuchtungslinie in dieser Querrichtung zu erzielen.

Aus der US 2008/0106746 A1 ist eine Beleuchtungsvorrichtung zur Beleuchtung eines Überwachungsbereichs bekannt.

Es ist daher Aufgabe der Erfindung, eine lichtstarke Beleuchtungsvorrichtung mit geeigneter Lichtverteilung anzugeben.

Diese Aufgabe wird durch eine Beleuchtungsvorrichtung gemäß Anspruch 1 und ein Verfahren zur Beleuchtung eines Überwachungsbereichs gemäß Anspruch 10 gelöst.

Dabei geht die Erfindung von dem Grundgedanken aus, eine möglichst homogene Beleuchtung des Überwachungsbereichs zu gewährleisten. Dann kann die verfügbare Helligkeitsdynamik des Sensors komplett zum Ausgleich von Remissionsdynamik oder Fremdlichtdynamik genutzt werden, und nur wenig Licht geht durch interne Verluste verloren. Dazu wird das Licht der Lichtquellen definiert umverteilt, um so ein Beleuchtungsfeld der gewünschten Form und Intensitätsverteilung zu erhalten. Die gewünschte Intensitätsverteilung ist in der Regel homogen. In manchen Situationen kann es günstig sein, hiervon gezielt abzuweichen, beispielsweise durch eine Erhöhung der Lichtleistung an den Rändern, um entsprechende Randverluste in der Kamera auszugleichen. Das Beleuchtungsfeld entsteht in zwei Schritten, wobei zunächst in der ersten Achse eine Linie und dann durch die Verkippung bzw. Ablenkung ein Beleuchtungsfeld jeweils gewünschter Intensitätsverteilung entsteht.

Die Erfindung hat den Vorteil, dass sehr kostengünstige und leistungsstarke Lichtquellen verwendet werden können. Es ist ein kompakter Aufbau der Beleuchtungsvorrichtung möglich. In dem Beleuchtungsfeld wird eine sehr gute Homogenität bei geringen Lichtverlusten und ohne Beeinträchtigung der Kohärenz erreicht. Die Lichtverteilung kann auch gezielt von einer homogenen Verteilung abweichen und ist so sehr flexibel.

Das Mikrolinsenfeld hat eine zweifache optische Wirkung, nämlich eine Intensitätsumverteilung in der ersten Achse und eine Lichtverteilung auf das Beleuchtungsfeld in der zweiten Achse. Diese beiden Wirkungen können auch in zwei getrennten optischen Elementen verwirklicht werden. Das Mikrolinsenfeld ist dann planar und sorgt für eine Beleuchtungslinie der gewünschten Intensitätsverteilung. Ein vor- oder nachgeordnetes Prismenfeld, also beispielsweise ein Array aus Keilen eines optisch transparenten Materials wie Glas, zieht die Linie zu dem Beleuchtungsfeld auf. Das hat fertigungstechnische Vorteile, bringt aber auch einen gewissen Justageaufwand und zusätzliche Grenzflächenverluste mit sich. Beide Ausführungsformen lassen sich prinzipiell auch mischen, indem einem nicht planaren Mikrolinsenfeld ein Prismenfeld zugeordnet wird und sich die Ablenkungen in der zweiten Achse somit addieren.

Die zu einer Linie angeordneten Lichtquellen sind bevorzugt die Emitter eines Laserbarrens, dessen slow axis mit der ersten Achse und dessen fast axis mit der zweiten Achse zusammenfällt, wobei der Laserbarren insbesondere eine interne Kollimierungsoptik für die Kollimierung der ausgesandten Lichtbündel in der zweiten Achse aufweist. Ist mehr als eine Linie von Lichtquellen vorgesehen, so werden entsprechend mehrere Laserbarren eingesetzt, die auch zu einem Laserstack gestapelt sein können. Damit werden noch höhere Lichtleistungen erreicht.

Es gibt Laserbarren auch mit einer großen Anzahl von 10 oder mehr Emitterflächen. Sie sind schmalbandig und haben hohe Ausgangsleistungen. Außerdem sind die Laserkosten pro Watt Ausgangsleistung sehr gering. Laserbarren sind damit leistungsstärker und vor allem deutlich günstiger als für Einzellaser (Single Emitter). Sie haben eine Achse mit hoher Strahlqualität (fast axis) und eine Achse mit geringer Strahlqualität (slow axis). Der Laserbarren wird so ausgerichtet, dass die erste Achse mit der slow axis zusammenfällt. Die erste Achse ist damit zugleich die Kollimierungsrichtung der Linsen des Mikrolinsenfeldes und die Richtung der Ausdehnung der Beleuchtungslinie. Außerdem wird der Laserbarren so ausgerichtet, dass die zweite Achse mit der fast axis zusammenfällt. In dieser Richtung findet durch eine interne Optik des Laserbarrens schon vor dem Mikrolinsenfeld eine Kollimierung statt, und es ist zugleich die Richtung, in welcher die Linsen des Mikrolinsenfelds beziehungsweise die Keilflächen des Prismenfelds bevorzugt verkippt sind. Das entstehende Beleuchtungsfeld wird dementsprechend in Richtung der ersten und der zweiten Achse aufgespannt. Die dritte senkrechte Achse ist die Senderichtung der Beleuchtungsvorrichtung beziehungsweise ihre optische Achse.

Zwischen den Lichtquellen und dem Mikrolinsenfeld oder dem Prismenfeld besteht bevorzugt ein direkter optischer Pfad. Es sind also dazwischen keine weiteren optischen Elemente, insbesondere keine Faserkopplungen vorgesehen. Einfache Linsen oder dergleichen, wie die interne Kollimierungsoptik eines Laserbarrens, sind denkbar. Wichtig ist der Erhalt der räumlichen Kohärenz der Lichtquellen.

Die Linsen sind bevorzugt untereinander gleichartig und insbesondere als sphärische Zylinderlinsen ausgebildet, die in ihren Längsachsen zumindest bis auf den Kippwinkel zueinander parallel ausgerichtet sind, wobei der Kippwinkel keinen Anteil in der ersten Achse aufweist. Anders ausgedrückt erfolgt die Verkippung somit nur in der durch die zweite Achse und die optische Achse aufgespannte Ebene. Eine leichte Abweichung von der Parallelität ist dabei denkbar. Beispielsweise kann eine zusätzliche Verkippung in der ersten Achse die Parallelverschiebung der von den einzelnen Lichtquellen erzeugten Linienstücke ausgleichen. Derartige Verkippungen sind aber konstruktionsbedingt nur sehr begrenzt möglich, da sich sonst die Zylinderlinsen physisch überlappen müssten.

Der Kippwinkel ist vorzugsweise konstant, beträgt insbesondere 0,1° bis 1 °, oder die optischen Ablenkelemente sind als Keile ausgebildet, deren Keilwinkel sich zwischen zwei benachbarten Ablenkelementen um den konstanten Kippwinkel unterscheidet. Dabei wird nochmals betont, dass der Kippwinkel als der relative Kippwinkel zwischen benachbarten Mikrostrukturelementen definiert ist, nicht als absoluter Kippwinkel. In einer abweichenden Terminologie absoluter Kippwinkel würde der absolute Kippwinkel von Mikrostrukturelement zu Mikrostrukturelement um denselben konstanten Betrag anwachsen, die absoluten Kippwinkel also eine lineare Funktion bilden. Entweder das Mikrolinsenfeld selbst oder das zugeordnete Prismenfeld sorgt durch diese gleichmäßige Verkippung für ein entsprechend gleichmäßiges Aufziehen der Beleuchtungslinie und damit Homogenität des Beleuchtungsfeldes. Ein besonders geeigneter Kippwinkel ist 0,5°. Abweichungen von konstanten Kippwinkeln sorgen für eine gezielte Abweichung von homogener Ausleuchtung in der zweiten Achse. Wenn beispielsweise am Rand des Mikrolinsenfeldes beziehungsweise des Prismenfeldes gezielt kleinere Kippwinkel gewählt werden als im mittleren Bereich, so führt dies zu einer Intensitätsüberhöhung an den Rändern des Beleuchtungsfeldes in der zweiten Achse.

Die Kippwinkel sind vorteilhafterweise so vorgegeben, dass das Beleuchtungsfeld ein gewünschtes Seitenverhältnis insbesondere von 4:3 oder von 16:9 aufweist. Die Kippwinkel beeinflussen direkt die Ausdehnung des Beleuchtungsfeldes in der zweiten Achse. So lässt sich ein Seitenverhältnis (aspect ratio) einstellen. Dieses entspricht bevorzugt dem Seitenverhältnis des Bildsensors der Kamera, um die volle Lichtenergie als auch die volle Pixelanzahl optimal auszunutzen. Selbstverständlich sind auch andere Seitenverhältnisse erreichbar, wenn beispielsweise ein verwendeter Bildsensorchip ein anderes Seitenverhältnis aufweist als 4:3 oder 16:9. Man kann außerdem durch relatives Verkippen der Beleuchtungsvorrichtung gegenüber dem Bildsensor um 90° erreichen, dass stets die längere Seite diejenige mit der besseren Homogenität ist, sei es die erste Achse oder die zweite Achse.

In der ersten Achse dagegen wird die Ausdehnung durch Anzahl und Abstand (pitch) der einzelnen Lichtquellen sowie der Mikrostrukturelemente vorgegeben. Die Ausdehnung in der ersten Achse kann weiterhin durch die Krümmungseigenschaften beziehungsweise Brennweiten der einzelnen Linsen des Mikrostrukturelements beeinflusst werden.

Vorteilhafterweise ist ein Abbildungselement vorgesehen, welches das Beleuchtungsfeld in eine gemeinsame Brennebene hinter den Lichtquellen abbildet. Der Abstand der Brennebene beträgt dabei einige Millimeter oder Zentimeter, bevorzugt zwischen 0,1 und 20 cm oder noch bevorzugter zwischen 0,5 und 3 cm. Das Abbildungselement kann als Abbildungslinse etwa in Form einer herkömmlichen konvexen Linse oder Zylinderlinse ausgebildet sein.

In einer bevorzugten Weiterbildung ist in der Beleuchtungsvorrichtung ein Mustererzeugungselement vorgesehen, welches derart im Strahlengang angeordnet ist, dass das Beleuchtungsfeld auf das Mustererzeugungselement fällt, um somit den Überwachungsbereich in einem im Wesentlichen rechteckigen Teilbereich mit einem strukturierten Beleuchtungsmuster auszuleuchten. Derartige Muster erhöhen den Kontrast, ermöglichen Lichtschnittverfahren oder aktive Stereoskopie mit einem Beleuchtungsmuster, welches regelmäßige oder lokal selbstunähnliche Beleuchtungsstrukturen in dem Überwachungsbereich erzeugt.

Das Mustererzeugungselement weist noch bevorzugter ein optisches Phasenelement mit Unebenheiten auf, die dafür ausgebildet sind, lokale Phasendifferenzen zwischen benachbart auf das Phasenelement treffenden Lichtanteilen zu erzeugen, wobei insbesondere die Unebenheiten unregelmäßig und überall in dem Bereich vorgesehen sind, in den das Beleuchtungsfeld fällt, um somit durch Interferenzen den rechteckigen Teilbereich des Überwachungsbereichs vollständig mit einem selbstunähnlichen Beleuchtungsmuster auszuleuchten. Ein Phasenelement hat gegenüber einem Dia oder einer Maske den Vorteil, dass das Licht nur umverteilt und nicht absorbiert wird, somit mehr Lichtleistung in dem Überwachungsbereich verfügbar ist und keine thermischen Probleme in der Beleuchtungsvorrichtung entstehen. Der Umverteilungseffekt des Phasenelements basiert auf der Kohärenz des einfallenden Lichts. Deshalb ist die erfindungsgemäße Beleuchtungsvorrichtung herkömmlichen Faserkopplungen oder Homogenisierern einschließlich Wabenkondensoren überlegen, die mit einem Phasenelement kein oder nur ein deutlich strukturärmeres Beleuchtungsmuster erzeugen könnten. Bevorzugt ist die Beleuchtungsvorrichtung Teil einer Sicherheitskamera, insbesondere einer 3D-Stereo-Sicherheitskamera, die einen Sicherheitsausgang und eine Auswertungseinheit aufweist, die dafür ausgebildet ist, unzulässige Eingriffe in den Überwachungsbereich zu erkennen und daraufhin ein Abschaltsignal über den Sicherheitsausgang auszugeben. Die verbesserte Beleuchtung unterstützt die sichere Erkennung von unzulässigen Ereignissen, ermöglicht größere Reichweiten und erhöht die Störfestigkeit der Sicherheitskamera.

Die Auswertungseinheit ist dabei bevorzugt für die Anwendung eines Stereoalgorithmus ausgebildet, in dem einander zugehörige Teilbereiche der von den beiden Kameras der Stereokamera aufgenommenen Bilder erkannt und deren Abstand anhand der Disparität berechnet wird. Die Vorteile einer homogenen, leistungsstarken Beleuchtung kommen bei aktiver Stereoskopie besonders zum Tragen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische räumliche Gesamtdarstellung einer Ausführungsform einer erfindungsgemäßen Beleuchtungseinheit in einer 3D- Sicherheitskamera zur Überwachung einer Gefahrenquelle;
- Fig. 2: eine Draufsicht auf eine Beleuchtungsvorrichtung zur Erläuterung der Strahlformung in einer ersten Achse;
- Fig. 3: eine vereinfachte dreidimensionale Darstellung einer Beleuchtungsvorrich- tung gemäß einer Ausführungsform der Erfindung mit einem verkippten Zy- linderlinsenfeld;
- Fig. 4: eine vereinfachte dreidimensionale Darstellung einer Beleuchtungsvorrich- tung gemäß einer Ausführungsform der Erfindung mit einem planaren Zy- linderlinsenfeld und einem nachgeordneten Prismen- oder Keilfeld;

- Fig. 5: eine vereinfachte dreidimensionale Draufsicht auf eine Beleuchtungsvor- richtung gemäß einer weiteren Ausführungsform der Erfindung zur Erzeu- gung eines Beleuchtungsmusters;
- Fig. 6: eine dreidimensionale Ansicht auf ein erfindungsgemäßes Mikrolinsenfeld;
- Fig. 7: eine weitere, in der X-Y-Ebene um 90° gedrehte dreidimensionale Ansicht des Mikrolinsenfeldes gemäß Figur 6;
- Fig. 8: eine dreidimensionale Ansicht in Richtung der optischen Achse auf das Mikrolinsenfeld gemäß Figur 6;
- Fig. 9: eine Ansicht des Beleuchtungsfeldes ohne Verkippung oder Ablenkung durch Mikrostrukturelemente; und
- Fig. 10: eine Ansicht des Beleuchtungsfeldes gemäß Figur 9, welches aufgrund der erfindungsgemäßen Verkippung oder Ablenkung durch Mikrostrukturele- mente zu einem homogenen Rechteck aufgezogen ist.

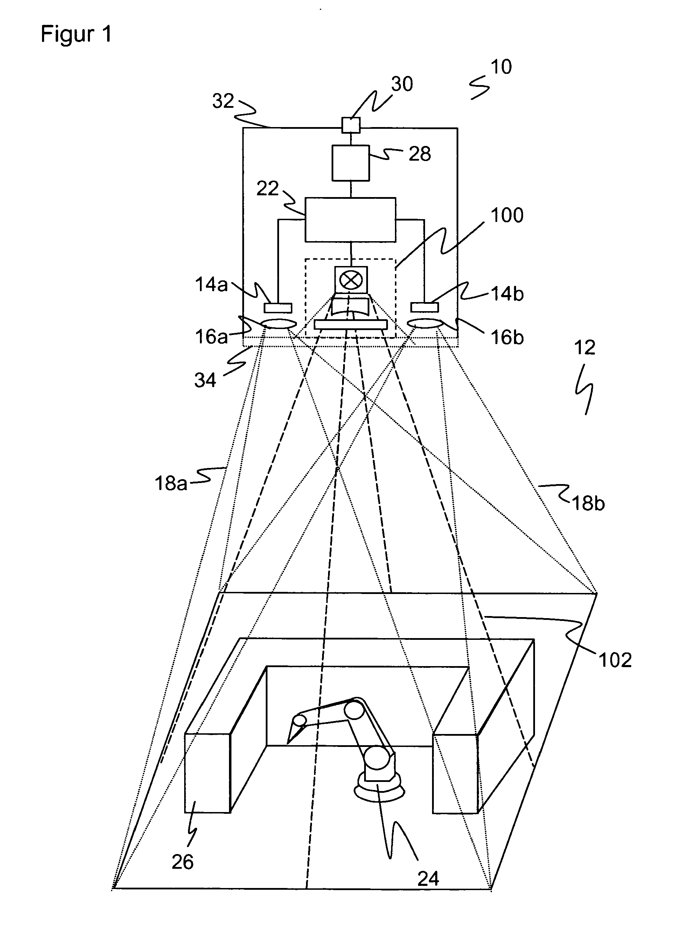

Figur 1 zeigt in einer schematischen dreidimensionalen Darstellung den allgemeinen Aufbau einer erfindungsgemäßen 3D-Sicherheitskamera 10 nach dem Stereoskopieprinzip, die zur sicherheitstechnischen Überwachung eines Raumbereichs 12 eingesetzt ist. Zwei Kameramodule sind in einem bekannten festen Abstand zueinander montiert und nehmen jeweils Bilder des Raumbereichs 12 auf. In jeder Kamera ist ein Bildsensor 14a, 14b vorgesehen, üblicherweise ein matrixförmiger Aufnahmechip, der ein rechteckiges Pixelbild aufnimmt, beispielsweise ein CCD- oder ein CMOS-Sensor. Den Bildsensoren 14a, 14b ist ein Objektiv mit einer abbildenden Optik zugeordnet, welche als Linsen 16a, 16b dargestellt sind und in der Praxis als jedes bekannte Abbildungsobjektiv realisiert sein können. Der Sichtwinkel dieser Optiken ist in Figur 1 durch gestrichelte Linien dargestellt, die jeweils eine Sichtpyramide 18a, 18b bilden.

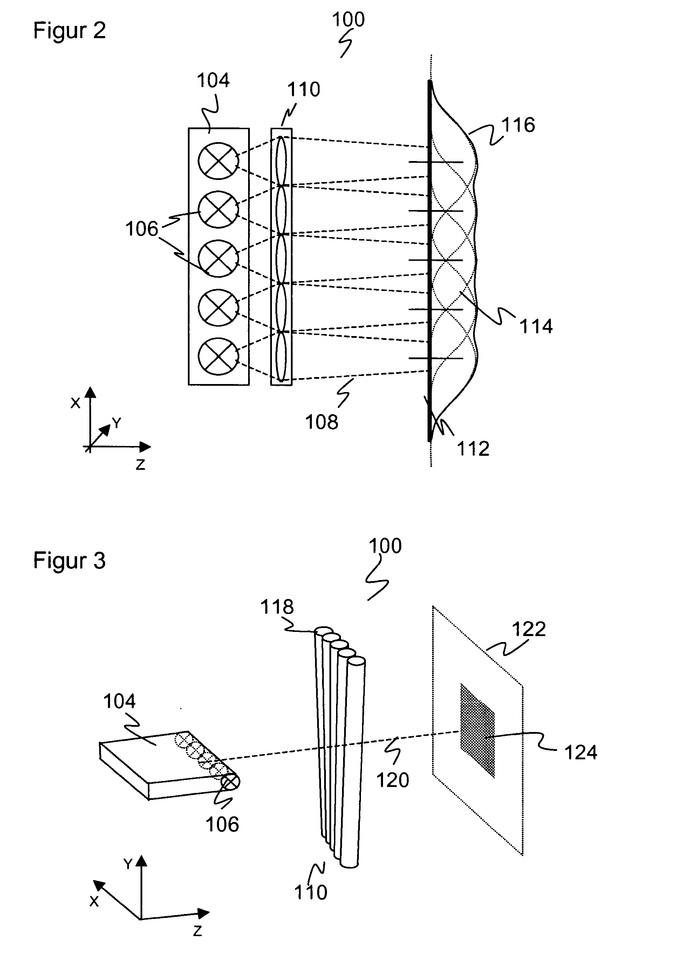

In der Mitte zwischen den beiden Bildsensoren 14a, 14b ist eine Beleuchtungseinheit 100 dargestellt, wobei diese räumliche Anordnung nur als Beispiel zu verstehen ist und die Beleuchtungseinheit ebenso asymmetrisch oder sogar außerhalb der Sicherheitskamera 3D angeordnet sein kann. Die erfindungsgemäße Beleuchtungseinheit 100 erzeugt in einem Beleuchtungsbereich 102 in dem Raumbereich 12 ein strukturiertes Beleuchtungsmuster, eine homogene Beleuchtung oder eine Beleuchtung mit einer sonstigen gewünschten Intensitätsverteilung, und wird weiter unten in verschiedenen Ausführungsformen im Zusammenhang mit den Figuren 2 bis 10 näher erläutert.

Mit den beiden Bildsensoren 14a, 14b und der Beleuchtungseinheit 100 ist eine Steuerung 22 verbunden. Die Steuerung 22 steuert einerseits die Beleuchtungseinheit 100 und empfängt andererseits Bilddaten der Bildsensoren 14a, 14b. Aus diesen Bilddaten berechnet die Steuerung 22 mit Hilfe einer stereoskopischen Disparitätsschätzung dreidimensionale Bilddaten (Entfernungsbild, Tiefenkarte) des Raumbereichs 12. Das Beleuchtungsmuster sorgt dabei für einen guten Kontrast und, besonders wenn es selbstunähnlich ist, eine eindeutig zuordenbare Struktur jedes Bildelements in dem beleuchteten Raumbereich 12. Der wichtigste Aspekt der Selbstunähnlichkeit ist das zumindest lokale, besser globale Fehlen von Translationssymmetrien, so dass keine scheinbaren Verschiebungen von Bildelementen in den jeweils aus unterschiedlicher Perspektive aufgenommenen Bildern aufgrund gleicher Beleuchtungsmusterelemente erkannt werden, welche Fehler in der Disparitätsschätzung verursachen würden.

Im von der 3D-Sicherheitskamera 10 überwachten Raumbereich 12 können sich bekannte und unerwartete Objekte befinden. Dabei kann es sich beispielsweise um einen Roboterarm 24, eine Maschine, eine Bedienperson und anderes handeln. Der Raumbereich 12 bietet Zugang zu einer Gefahrenquelle, sei es weil es ein Zugangsbereich ist oder weil sich eine gefährliche Maschine 24 in dem Raumbereich 12 selbst befindet. Um diese Gefahrenquelle 24 abzusichern, können ein oder mehrere virtuelle Schutz- und Warnfelder 26 konfiguriert werden. Sie bilden einen virtuellen Zaun um die gefährliche Maschine 24. Aufgrund der dreidimensionalen Auswertung ist es möglich, Schutz- und Warnfelder 26 dreidimensional zu definieren, so dass eine große Flexibilität entsteht.

Die Steuerung 22 wertet die dreidimensionalen Bilddaten auf unzulässige Eingriffe aus. Die Auswertungsregeln können beispielsweise vorschreiben, dass in Schutzfeldern überhaupt kein Objekt vorhanden sein darf. Flexiblere Auswertungsregeln sehen vor, zwischen erlaubten und nicht erlaubten Objekten zu differenzieren, etwa anhand von Bewegungsbahnen, Mustern oder Konturen, Geschwindigkeiten oder allgemeinen Arbeitsabläufen, die sowohl vorab als erlaubt eingelernt als auch anhand von Bewertungen, Heuristiken oder Klassifikationen noch während des Betriebs eingeschätzt werden.

Erkennt die Steuerung 22 einen unzulässigen Eingriff in ein Schutzfeld 26, so wird über eine Warn- oder Abschalteinrichtung 28, die wiederum in die Steuerung 22 integriert sein kann, eine Warnung ausgegeben oder die Gefahrenquelle abgesichert, beispielsweise der Roboterarm 24 angehalten. Sicherheitsrelevante Signale, also vor allem das Abschaltsignal, werden über einen Sicherheitsausgang 30 ausgegeben (OSSD, Output Signal Switching Device). Dabei hängt es von der Anwendung ab, ob eine Warnung genügt, beziehungsweise es ist eine zweistufige Absicherung vorgesehen, bei der zunächst gewarnt und erst bei fortgesetztem Objekteingriff oder noch tieferem Eindringen abgeschaltet wird. Statt einer Abschaltung kann die angemessene Reaktion auch das sofortige Verbringen in eine ungefährliche Parkposition sein. Die 3D-Sicherheitskamera 10 wird von einem Gehäuse 32 umgeben und geschützt. Durch eine Frontscheibe 34 kann Licht in und aus dem Raumbereich 12 hindurchtreten.

Um für sicherheitstechnische Anwendungen geeignet zu sein, ist die 3D-Sicherheitskamera 10 fehlersicher ausgelegt. Dies bedeutet unter anderem, dass sich die 3D-Sicherheitskamera 10 selber, auch in Zyklen unterhalb der geforderten Ansprechzeit, testen kann, insbesondere auch Defekte der Beleuchtungseinheit 100 erkennt und somit sicherstellt, dass das Beleuchtungsmuster in einer erwarteten Mindestintensität verfügbar ist, und dass der Sicherheitsausgang 30 sowie die Warn- oder Abschalteinrichtung 26 sicher, beispielsweise zweikanalig ausgelegt sind. Ebenso ist auch die Steuerung 22 selbstsicher, wertet also zweikanalig aus oder verwendet Algorithmen, die sich selbst prüfen können. Derartige Vorschriften sind für allgemeine berührungslos wirkende Schutzeinrichtungen in der EN 61496-1 bzw. der IEC 61496 sowie in der DIN EN ISO 13849 und EN 61508 normiert. Eine entsprechende Norm für Sicherheitskameras befindet sich in der Vorbereitung.

Die Erfindung wird am Beispiel der 3D-Sicherheitskamera 10 erläutert. Die Beleuchtungseinheit 100 ist aber auch für andere Kameras, andere Sensoren oder in weiteren Anwendungen einsetzbar.

Figur 2 zeigt eine vereinfachte Draufsicht auf eine erfindungsgemäße Beleuchtungseinheit 100. Ein Laserbarren 104 weist eine Vielzahl von Einzelemittern 106 auf, die in einer Reihe angeordnet sind. Statt eines Laserbarrens 104 können prinzipiell auch andere Halbleiterlichtquellen, beispielsweise LEDs oder Einzelemitter-Laser, Verwendung finden, die nachfolgend beschriebene Optik funktioniert dann in gleicher Weise. Ein Laserbarren 104 ist aber eine besonders kostengünstige, leistungsstarke Quelle für kohärentes Licht.

Die slow axis der Einzelemitter 106 bildet eine in Figur 2 als X-Achse bezeichnete erste Achse. Ausgesandte Lichtbündel 108 werden in der X-Achse von einem Mikrolinsenfeld 110 gebündelt. Im rechten Teil der Figur 2 ist über der entstehenden Beleuchtungslinie 112 die Intensitätsverteilung 114 der einzelnen Lichtbündel 108 sowie die Überlagerung 116 aller einzelnen Intensitätsverteilungen 114 gezeigt. Der gaussförmige Abfall der Intensitätsverteilungen 114 sowie die Kollimierung ist übertrieben dargestellt. In der Praxis sind die einzelnen Intensitätsverteilungen 114 breiter und damit selbst linienförmig.

Die fast axis des Laserbarrens 104. steht in Figur 2 senkrecht zur Papierebene. In dieser als Y-Achse bezeichneten zweiten Achse werden die Strahlbündel 108 der Einzelemitter 106 durch eine nicht dargestellte interne Optik kollimiert. Dadurch wird letztlich auch die Dicke der Beleuchtungslinie 112 eingestellt. Somit illustriert Figur 2, wie sich durch ein Mikrolinsenfeld 110 in einem ersten Schritt mehrere Beleuchtungslinien zu einer homogenen gemeinsamen Beleuchtungslinie überlagern.

Figur 3 zeigt eine dreidimensionale Darstellung der Beleuchtungseinheit 100, wobei hier wie im Folgenden gleiche Bezugszeichen die gleichen Merkmale bezeichnen. Wie hier erkennbar, sind die einzelnen Linsen 118 des Mikrolinsenfelds 110 langgestreckte sphärische Zylinderlinsen, deren optisch wirksame Krümmung für die Kollimierung in der slow axis sorgt. Die Linsen 118 sind im Wesentlichen parallel zueinander ausgerichtet, zugleich aber in der von der Y-Achse und der mit der optischen Achse 120 der Beleuchtungseinheit 100 zusammenfallenden Z-Achse aufgespannten Ebene gegeneinander verkippt. Diese Verkippung nimmt, vom Laserbarren 104 aus gesehen, von links nach rechts zu, beispielsweise mit Verkippungen von -1 °, -0,5°, 0°, 0,5° und 1° für die fünf dargestellten Linsen 118. Der Kippwinkel zweier benachbarter Linsen 118 beträgt also 0,5°. Andere, auch unregelmäßig verteilte und nicht monoton zu- oder abnehmende Kippwinkel sind vorstellbar.

Auf einer fiktiven Projektionsebene 122 kurz hinter der Beleuchtungseinheit 100 bildet sich dann ein rechteckiges Beleuchtungsfeld 124 aus. In X-Richtung des Beleuchtungsfelds 124 ist die Ausdehnung von dem Öffnungswinkel der Einzelemitter 106 in X-Richtung, der slow axis, und der Krümmung beziehungsweise Brennweite der Linsen 118 bestimmt. Dies legt nämlich die Länge der Beleuchtungslinien fest. In Y-Richtung resultiert die Ausdehnung aus den Kippwinkeln. Jede Linse 118 lenkt eine zugehörige Beleuchtungslinie eines Einzelemitters 106 in Y-Richtung ab. Aus den somit übereinander angeordneten Beleuchtungslinien setzt sich das Beleuchtungsfeld 124 zusammen. Die Linseneigenschaften des Mikrolinsenfelds 110 bewirken somit die Strahlformung der Einzelemitter 106 zu einer Beleuchtungslinie 112, während die Verkippung diese Beleuchtungslinie 112 zu dem flächigen, rechteckigen Beleuchtungsfeld 124 aufzieht.

Die beiden anhand der Figuren 2 und 3 einzeln beschriebenen optischen Effekte des Mikrolinsenfelds 110 sind nur für die Zwecke der Erläuterung voneinander getrennt. In der Realität findet natürlich die Kollimierung der Lichtbündel 108 in X-Richtung einerseits und die Ablenkung in Y-Richtung andererseits gleichzeitig statt.

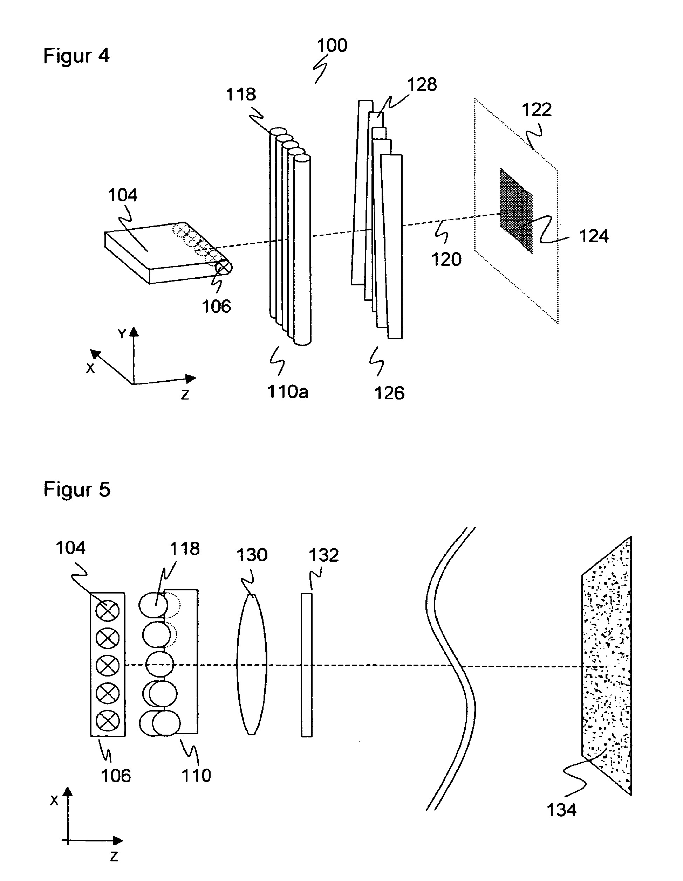

Figur 4 dagegen zeigt eine Ausführungsform, in der die beiden optischen Effekte auch in der Realität getrennt sind und durch jeweils eigene optische Elemente erzeugt werden. Das Mikrolinsenfeld 110a ist hier planar ausgebildet und lenkt somit die Beleuchtungslinien nicht in Y-Richtung ab. Dies geschieht erst in einem vor- oder nachgeordneten Prismen- oder Keilfeld 126. Es besteht beispielsweise aus zueinander verkippten Keilen 128 aus Glas oder einem anderen optischen Material. Jeder Keil 128 weist einen anderen Keilwinkel analog den Kippwinkeln in dem Mikrolinsenfeld 110 der Figur 3 auf. Denkbar ist auch eine Kombination, in der ein Mikrolinsenfeld 110 mit verkippten Linsen 118 mit dem Prismenfeld 126 kombiniert wird und sich die Ablenkung in Y-Richtung somit addiert.

Somit entsteht bei regelmäßiger Anordnung und Verkippung der Linsen 118 beziehungsweise der Keile 128 ein homogenes Beleuchtungsfeld 124. Durch geeignete Wahl der individuellen Kippwinkel und durch Ergänzung der Form der Linsen 118 mit asphärischen Anteilen besteht die Möglichkeit, eine gezielte Umverteilung des Lichts innerhalb des Beleuchtungsfelds 124 durchzuführen. Damit kann zum Beispiel zusätzlich die Vignettierung der Empfangsoptik 116 oder Verluste durch streifendes Auftreffen des Lichts teilweise kompensiert werden.

In einer weiteren Ausführungsform gemäß Figur 5 wird dieses homogene Beleuchtungsfeld 124 ausgenutzt, um ein Muster in den Raumbereich 12 zu projizieren. Zur Vereinfachung wird hier nur das Mikrolinsenfeld 110 mit verkippten Linsen 118 gezeigt, eine weitere Ausführungsform mit eine planaren Mikrolinsenfeld 118 und einem Prismenfeld 126 arbeitet ganz analog.

Eine Abbildungslinse 130, die als konvexe Zylinderlinse ausgeführt sein kann, sammelt die individuell unterschiedlich abgelenkten Strahlbündel 108 und bildet sie in einer Brennebene wenige Zentimeter hinter dem Laserbarren 104 ab. In der hinteren Brennebene der Abbildungslinse 130 wird somit die homogene Lichtverteilung erzeugt. Das homogene Beleuchtungsfeld 124 wird durch ein Phasenelement 132 in den Raumbereich 12 projiziert. Das Phasenelement 132 ist beispielsweise als Phasenplatte mit Unebenheiten über den Bereich ausgebildet, in dem es von dem Beleuchtungsfeld 124 ausgeleuchtet wird. Durch Interferenzeffekte entsteht in dem Raumbereich 12 ein selbstunähnliches, strukturiertes Beleuchtungsmuster 134. Um diese Interferenzeffekte zu erzeugen, sollte die Kohärenz des Lichts des Laserbarrens 104 erhalten bleiben.

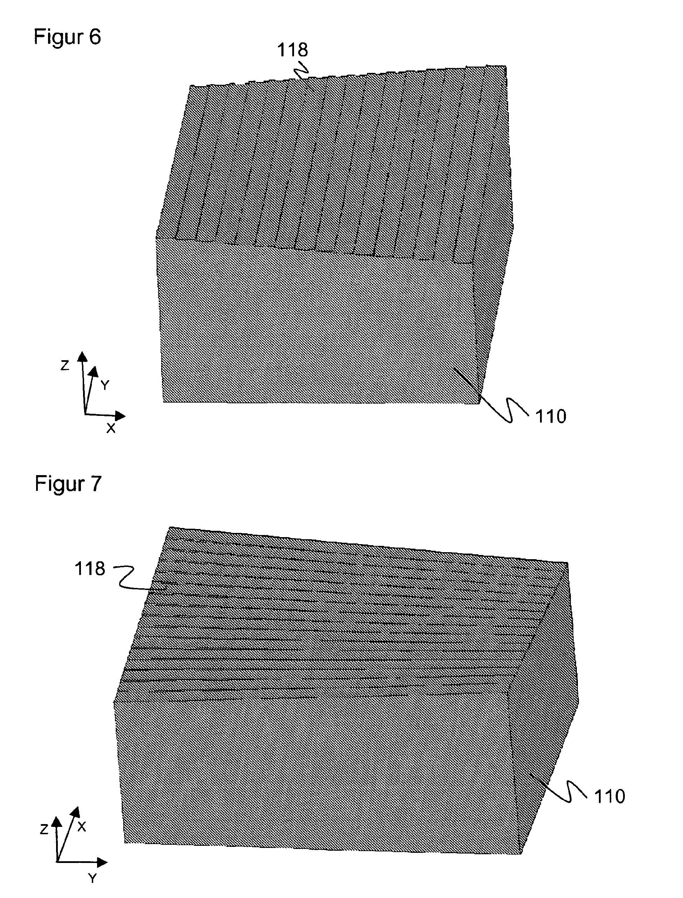

Die Figuren 6 bis 8 zeigen in dreidimensionalen Ansichten aus verschiedenen Perspektiven eine Darstellung des Mikrolinsenfelds 110. Die einzelnen Linsen 118 sind ohne Krümmung vereinfacht dargestellt, um die Kippwinkel besser erkennen zu lassen. Anders als in den schematischen Darstellungen der Figuren 3 und 4 genügt es, die Zylinderlinsen 118 nur halbseitig mit gekrümmten Flächen zu versehen und so als Vorderfläche eines Blocks optisch durchlässigen Materials auszubilden. An diesen Block können rückseitig weitere optische Elemente, etwa die Abbildungslinse 130, unmittelbar angeschlossen werden, um einen Luftspalt zumindest weitestgehend zu vermeiden und dennoch den gewünschten Abstand einzustellen.

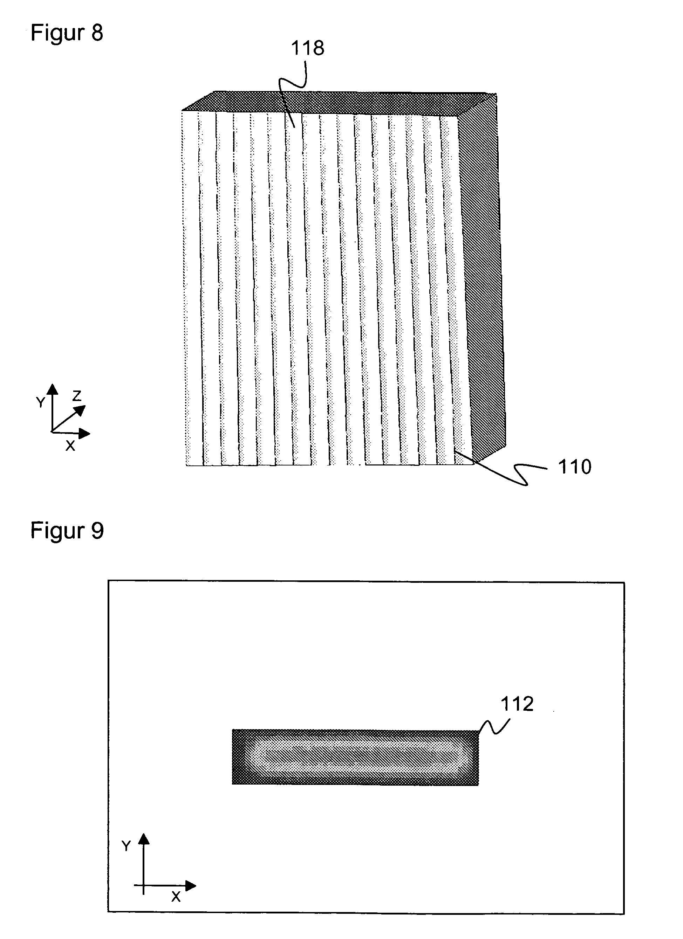

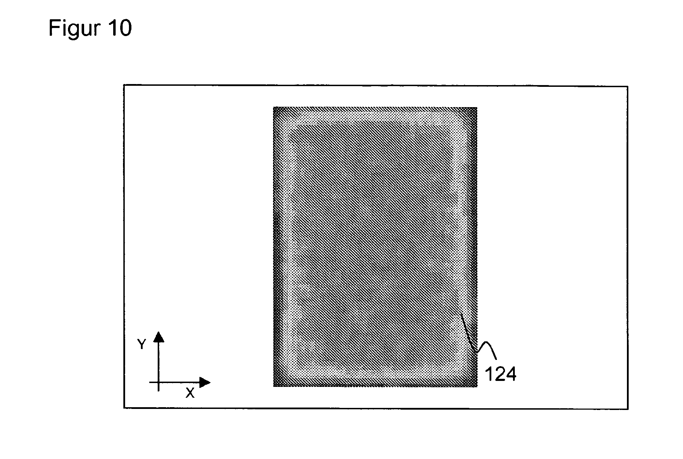

Die Figuren 9 und 10 zeigen Simulationsergebnisse der Beleuchtungslinie 112 beziehungsweise des Beleuchtungsfeldes 124. In Figur 9 ist demnach der Kippwinkel auf 0° eingestellt, so dass nur eine Beleuchtungslinie 112 entsteht. In Figur 10 ist dagegen ein endlicher Kippwinkel eingestellt. Die zu jeweils einem Einzelemitter 106 gehörigen Beleuchtungslinien werden in Y-Richtung gegeneinander versetzt und bilden insgesamt ein rechteckiges Beleuchtungsfeld 124 hoher Homogenität. Über den Betrag des Kippwinkels sind die Seitenverhältnisse (aspect ratio) veränderbar.

Da die Einzelemitter 106 einen wenn auch kleinen Abstand zueinander aufweisen, sind die einzelnen Beleuchtungslinien, aus denen sich das Beleuchtungsfeld 124 zusammensetzt, leicht gegeneinander verschoben. Das Beleuchtungsfeld 124 wird dadurch leicht rautenförmig. Es ist denkbar, eine ausgleichende Scherung vorzunehmen, beispielsweise durch zusätzliche Verkippung der Linsen 118 in der durch die X-Achse und Y-Achse aufgespannten Ebene, oder durch ein weiteres Prismenfeld. Praktisch erforderlich ist das nur in besonders anspruchsvollen Anwendungen, da der Rauteneffekt häufig sehr klein ist und die Scherung die Gefahr zusätzlicher optischer Störungen oder Verluste in sich birgt.

Die Erfindung ermöglicht die definierte Umverteilung des Lichts eines Laserbarrens 104 in ein homogenes, rechteckiges Lichtfeld 124 variabel einstellbarer Seitenverhältnisse mit Hilfe einfacher Mikrostrukturelemente. Auf diese Weise werden Laserbarren 104 als Beleuchtungsquelle einer Beleuchtungsvorrichtung 100 für einen Kamerasensor 10 einsetzbar. Das ausgeleuchtete Feld eines Laserbarrens 104 wird an das Projektionsfeld einer Laserbeleuchtung angepasst. Dadurch werden die Verluste gering gehalten und eine hohe Beleuchtungshomogenität erreicht. Besonders bei Verwendung von Zylinderlinsen 108 sind die Mikrostrukturelemente 110, 110a und 126 in der Herstellung sehr kostengünstig und einfach, denn es kann einmalig eine Gussform gefertigt und das Mikrostrukturelement 110, 110a und 126 in beliebiger Anzahl daraus abgeformt werden.

## Patentansprüche

1. Beleuchtungsvorrichtung (100) zur Beleuchtung eines Überwachungsbereichs (12) mit einer Vielzahl von in mindestens einer Linie angeordneten Lichtquellen (106) und einem den Lichtquellen (106) vorgeordneten Mikrolinsenfeld (110), welches eine Vielzahl von Linsen (118) aufweist, wobei jede Linse (118) dafür ausgebildet ist, ein von jeweils einer Lichtquelle (106) ausgesandtes Lichtbündel (108) in einer ersten Achse zu kollimieren, um somit mindestens eine Beleuchtungslinie (112) zu erzeugen,
wobei jeweils zwei benachbarte Linsen (118) in dem Mikrolinsenfeld (110) zueinander um einen Kippwinkel verkippt angeordnet sind, oder wobei dem Mikrolinsenfeld (110a) ein Prismenfeld (126) mit einem optischen Ablenkelement (128) je Linse (118) zugeordnet ist, wobei die optischen Ablenkelemente (128) zueinander verkippt sind oder untereinander unterschiedliche Keilwinkel aufweisen,
wobei der Kippwinkel konstant ist und 0,1° bis 1 ° beträgt, oder die optischen Ablenkelemente (128) als Keile ausgebildet sind, deren Keilwinkel sich zwischen zwei benachbarten Ablenkelementen (128) um den konstanten Kippwinkel unterscheidet, um somit die Beleuchtungslinie (112) in einer zweiten Achse quer zu der ersten Achse zu einem Beleuchtungsfeld (124) aufzuziehen, und dass ein Mustererzeugungselement (132) vorgesehen ist, welches derart im Strahlengang angeordnet ist, dass das Beleuchtungsfeld (124) auf das Mustererzeugungselement (132) fällt, um somit den Überwachungsbereich (124) in einem im Wesentlichen rechteckigen Teilbereich mit einem strukturierten Beleuchtungsmuster (134) auszuleuchten, wobei das Mustererzeugungselement (132) ein optisches Phasenelement mit Unebenheiten aufweist, die dafür ausgebildet sind, lokale Phasendifferenzen zwischen benachbart auf das Phasenelement (132) treffenden Lichtanteilen zu erzeugen.

2. Beleuchtungsvorrichtung (100) nach Anspruch 1,
wobei die zu einer Linie angeordneten Lichtquellen (106) die Emitter eines Laserbarrens (104) sind, dessen slow axis mit der ersten Achse und dessen fast axis mit der zweiten Achse zusammenfällt, und wobei der Laserbarren (104) insbesondere eine interne Kollimierungsoptik für die Kollimierung der ausgesandten Lichtbündel (108) in der zweiten Achse aufweist.

3. Beleuchtungsvorrichtung (100) nach einem der vorhergehenden Ansprüche, wobei ein direkter optischer Pfad zwischen den Lichtquellen (106) und dem Mikrolinsenfeld (110) oder dem Prismenfeld (126) besteht.

4. Beleuchtungsvorrichtung (100) nach einem der vorhergehenden Ansprüche, wobei die Linsen (118) untereinander gleichartig und insbesondere als sphärische Zylinderlinsen ausgebildet sind, die in ihren Längsachsen zumindest bis auf den Kippwinkel zueinander parallel ausgerichtet sind, wobei der Kippwinkel keinen Anteil in der ersten Achse aufweist.

5. Beleuchtungsvorrichtung (100) nach einem der vorhergehenden Ansprüche, wobei die Kippwinkel so vorgegeben sind, dass das Beleuchtungsfeld (124) ein gewünschtes Seitenverhältnis insbesondere von 4:3 oder von 16:9 aufweist.

6. Beleuchtungsvorrichtung (100) nach einem der vorhergehenden Ansprüche, wobei ein Abbildungselement (130) vorgesehen ist, welches das Beleuchtungsfeld (124) in eine gemeinsame Brennebene hinter den Lichtquellen (106) abbildet.

7. Beleuchtungsvorrichtung (100) nach einem der vorhergehenden Ansprüche, wobei die Unebenheiten des Mustererzeugungselements (132) unregelmäßig und überall in dem Bereich vorgesehen sind, in den das Beleuchtungsfeld (124) fällt, um somit durch Interferenzen den rechteckigen Teilbereich des Überwachungsbereichs vollständig mit einem selbstunähnlichen Beleuchtungsmuster (134) auszuleuchten.

8. Sicherheitskamera (10), insbesondere 3D-Stereo-Sicherheitskamera, mit mindestens einer Beleuchtungsvorrichtung (100) nach einem der Ansprüche 1 bis 7, die einen Sicherheitsausgang (30) und eine Auswertungseinheit (22, 28) aufweist, die dafür ausgebildet ist, unzulässige Eingriffe in den Überwachungsbereich (12, 26) zu erkennen und daraufhin ein Abschaltsignal über den Sicherheitsausgang (30) auszugeben.

9. Sicherheitskamera (10) nach Anspruch 8,
wobei die Auswertungseinheit (22) für die Anwendung eines Stereoalgorithmus ausgebildet ist, in dem einander zugehörige Teilbereiche der von den beiden Kameras (14a-b, 16a-b) der Stereokamera (10) aufgenommenen Bilder erkannt und deren Abstand anhand der Disparität berechnet wird.

10. Verfahren zur Beleuchtung eines Überwachungsbereichs (12), bei dem von jeweils einer Lichtquelle (106) aus einer Vielzahl von in mindestens einer Linie angeordneten Lichtquellen (106), insbesondere mindestens einem Laserbarren (104), ausgesandte Lichtbündel (108) in einem Mikrolinsenfeld (110) mit einer Vielzahl von Linsen (118) in einer ersten Achse kollimiert werden, um somit mindestens eine Beleuchtungslinie (112) zu erzeugen,
wobei die Beleuchtungslinie (112) durch Verkippen jeweils zweier benachbarter Linsen (118) in dem Mikrolinsenfeld (110) zueinander um einen konstanten Kippwinkel von 0,1 ° bis 1°, oder durch ein dem Mikrolinsenfeld (110a) zugeordnetes Prismenfeld (126) mit einem optischen Ablenkelement (128) je Linse (118), wobei die optischen Ablenkelemente (128) zueinander um den Kippwinkel verkippt sind oder je zwei benachbarte Ablenkelemente untereinander um den konstanten Kippwinkel unterschiedliche Keilwinkel aufweisen, in einer zweiten Achse quer zu der ersten Achse aufgezogen wird,
wobei durch das Aufziehen ein Beleuchtungsfeld entsteht, das auf ein Mustererzeugungselement (132) fällt, um somit den Überwachungsbereich (124) in einem im Wesentlichen rechteckigen Teilbereich mit einem strukturierten Beleuchtungsmuster (134) auszuleuchten, wobei das Mustererzeugungselement (132) ein optisches Phasenelement mit Unebenheiten aufweist, welche lokale Phasendifferenzen zwischen benachbart auf das Phasenelement (132) treffenden Lichtanteilen zu erzeugen.

11. Verfahren nach Anspruch 10,
wobei die Längsausdehnung der Beleuchtungslinie (112) in Richtung der ersten Achse durch die Krümmung der Linsen (118) des Mikrolinsenfelds (110) und die Querausdehnung des Beleuchtungsfelds (124) in Richtung der zweiten Achse durch den Kippwinkel oder einen Unterschiedswinkel des Ablenkungswinkels zweier benachbarter optischer Ablenkelemente (128) des Prismenfelds (126) und damit insbesondere ein gewünschtes Seitenverhältnis des Beleuchtungsfelds (124) von 4:3 oder von 16:9 eingestellt wird.

12. Stereoskopisches Bilderfassungsverfahren zur Erzeugung einer dichten Tiefenkarte einer Szenerie in einem Überwachungsbereich (12), wobei der Überwachungsbereich (12) mit einem Verfahren nach Anspruch 10 oder 11 beleuchtet wird.

13. Verfahren zur sicheren dreidimensionalen Überwachung eines Raumbereichs (12), bei dem eine mit einem Bilderfassungsverfahren gemäß Anspruch 12 erzeugte dichte Tiefenkarte auf unzulässige Eingriffe ausgewertet und, wenn ein unzulässiger Eingriff erkannt wird, ein Abschaltsignal an eine Gefahrenquelle (24) ausgegeben wird.

## Claims

1. An illumination apparatus (100) for illuminating a monitored zone (12) having a plurality of light sources (106) arranged in at least one line and having a microlens field (110) which is arranged in front of the light sources (106) and which has a plurality of lenses (118), wherein each lens (118) is designed to collimate a light beam (108) transmitted by a respective light source (106) in order thus to generate at least one illuminated line (112),
wherein a respective two adjacent lenses (118) are arranged tilted by a tilt angle with respect to one another in the microlens field (110); or wherein a prism field (126) having an optical deflection element (128) per lens (118) is associated with the microlens field (128), with the optical deflection elements (128) being tilted with respect to one another or having different wedge angels with respect to one another,
wherein the tilt angle is constant and amounts to 0.1 to 1°, or the optical deflection means (128) are made as wedges whose wedge angles between two adjacent deflection elements differ by the constant tilt angle in order thus to set up the illuminated line (112) in a second axis transverse to the first axis to an illuminated field (124), and wherein a pattern generation element (132) is provided which is arranged in the beam path such that the illuminated field (124) is incident onto the pattern generation element (132) in order thus to illuminate the monitored zone (124) with a structured illumination pattern (134) in a substantially rectangular part zone; wherein the pattern generation element (132) has an optical phase element having irregularities which are designed to generate local phase differences between light portions incident onto the phase element (132) in an adjacent manner.

2. An illumination apparatus (100) in accordance with claim 1,
wherein the light sources (106) arranged to form a line are the emitters of a laser bar (104) whose slow axis coincides with the first axis and whose fast axis coincides with the second axis; and wherein the laser bar (104) in particular has an internal collimating optics for the collimation of the emitted light beams (108) in the second axis.

3. An illumination apparatus (100) in accordance with any one of the preceding claims,
wherein there is a direct optical path between the light sources (106) and the microlens field (110) or the prism field (126).

4. An illumination apparatus (100) in accordance with any one of the preceding claims,
wherein the lenses (118) are the same as one another and are in particular designed as spherical cylindrical lenses which are arranged in parallel to one another in their longitudinal axes, at least except for the tilt angle, with the tilt angle not having any portion in the first axis.

5. An illumination apparatus (100) in accordance with any one of the preceding claims,
wherein the tilt angles are defined so that the illuminated field (124) has a desired aspect ratio in particular of 4:3 or of 16:9.

6. An illumination apparatus (100) in accordance with any one of the preceding claims,
wherein an imaging element (130) is provided which images the illuminated field (124) into a common focal plane behind the light sources (106).

7. An illumination apparatus (100) in accordance with any one of the preceding claims,
wherein the irregularities of the pattern generation element (132) are provided in an irregular manner and everywhere in the zone into which the illuminated field (124) is incident in order thus to illuminate the rectangular part zone of the monitored zone completely with a non-self similar illumination pattern (134) by interference.

8. A safety camera (10), in particular a 3D stereoscopic safety camera, having at least one illumination apparatus (100) in accordance with any one of the claims 1 to 7, which has a safety output (30) and an evaluation unit (22, 28) which is designed to recognize unauthorized intrusions into the monitored zone (12, 26) and thereupon to output a shutdown signal via the safety output (30).

9. A safety camera (9) in accordance with claim 8,
wherein the evaluation unit (22) is designed for the application of a stereo algorithm in which part zones belonging to one another of the images taken by the two cameras (14a-b, 16a-b) of the stereoscopic camera (10) are recognized and whose spacing is calculated with respect to the disparity.

10. A method of illuminating a monitored one (12), wherein light beams (108) transmitted from a respective one light source (106) of a plurality of light sources (106) arranged in at least one line, in particular at least one laser bar (104), are collimated in a microlens field (110) having a plurality of lenses (118) in a first axis in order thus to generate at least one illuminated line (112),
wherein the illuminated line (112) is set up in a second axis transverse to the first axis by tilting two respective adjacent lenses (118) in the microlens field (110) with respect to one another by a constant tilt angle of 0.1° to 1°, or by a prism field (126) associated with the microlens field (110a) and having an optical deflection element (128) per lens (118), with the optical deflection elements (128) being tilted by the tilt angle with respect to one another or with two respective adjacent deflection elements among one another having wedge angles differing from one another by the constant tilt angle,
wherein an illuminated field arises by the setting up which is incident onto a pattern generating element (132) in order thus to illuminate the monitored zone (124) in a substantially rectangular part zone having a structured illumination pattern (134); wherein the pattern generation element (132) has an optical phase element having irregularities which generate local phase differences between light portions incident onto the phase element (132) in an adjacent manner.

11. A method in accordance with claim 10,
wherein the longitudinal extent of the illuminated line (112) is set in the direction of the first axis by the curvature of the lenses (118) of the microlens field (110) and the lateral extent of the illuminated field (124) is set in the direction of the second axis by the tilt angle or by a difference angle of the deflection angle of two adjacent optical deflection elements (128) of the prism field (126) and thus in particular a desired aspect ratio of the illuminated field (124) of 4:3 or of 16:9 is set.

12. A stereoscopic image detection method for the generation of a dense depth map of a scene in a monitored zone (12), wherein the monitored zone (12) is illuminated using a method in accordance with claim 10 or claim 11.

13. A method for the safe three-dimensional monitoring of a spatial zone (12), wherein a dense depth map generated using an image detection method in accordance with claim 12 is evaluated for unpermitted intrusions and, if an unpermitted intrusion is recognized, a shutdown signal is output to a danger source (24).

## Revendications

1. Dispositif d'éclairage (100) pour l'éclairage d'une zone de surveillance (12) avec une pluralité de sources lumineuses (106) agencées sur au moins une ligne, et un champ de micro-lentilles (110), agencées avant les sources lumineuses (106), qui comprend une pluralité de lentilles (118), telles que chaque lentille (118) est réalisée pour collimater un faisceau lumineux (108), émis par une source lumineuse respective (106), suivant un premier axe, et engendrer ainsi au moins une ligne d'éclairage (112),
dans lequel deux lentilles respectivement voisines (118) dans le champ de micro-lentilles (110) sont agencées de façon basculée l'une par rapport à l'autre sur un angle de basculement, ou dans lequel un champ de prismes (126) est associé au champ de micro-lentilles (110a), avec un élément de déflexion optique (128) pour chaque lentille (118), et dans lequel les éléments de déflexion optique (128) sont basculés les uns par rapport aux autres ou présentent des angles en coin différents les uns par rapport aux autres,
dans lequel l'angle de basculement est constant et s'élève de 0,1° à 1°, ou dans lequel les éléments de déflexion optique (128) sont réalisés sous forme de coin, dont l'angle de coin entre deux éléments de déflexion voisins (128) diffère à raison de l'angle de basculement constant, pour ainsi tirer la ligne d'éclairage (112) suivant un second axe perpendiculairement au premier axe, vers un champ d'éclairage (124),
et en ce qu'il est prévu un élément de génération de motif (132), celui-ci étant agencé dans le trajet des faisceaux de telle manière que le champ d'éclairage (124) tombe sur l'élément de génération de motif (132), afin d'éclairer ainsi la zone de surveillance (124) dans une région partielle, sensiblement de forme rectangulaire, avec un motif d'éclairage structuré, ledit élément (132) de génération de motif comprenant un élément de phase optique avec des inégalités, qui sont réalisées pour générer des différences de phase locales entre les parts de lumière voisines qui tombent sur l'élément de phase (132).

2. Dispositif d'éclairage (100) selon la revendication 1,
dans lequel les sources lumineuses (106), agencées sur une ligne, sont les émetteurs d'un barreau à laser (104), dont l'axe lent coïncide avec le premier axe et dont l'axe rapide coïncide avec le second axe, et dans lequel les barreaux à laser (104) comprennent en particulier une optique de collimation interne pour la collimation du faisceau lumineux émis (108) suivant le second axe.

3. Dispositif d'éclairage (100) selon l'une des revendications précédentes,
dans lequel un trajet optique direct existe entre les sources lumineuses (106) et le champ de micro-lentilles (110) ou le champ de prismes.

4. Dispositif d'éclairage (100) selon l'une des revendications précédentes,
dans lequel les lentilles (118) sont réalisées de même type les unes par rapport aux autres, et en particulier sous forme de lentilles cylindriques sphériques, qui sont orientées parallèlement les unes aux autres suivant leurs axes longitudinaux, au moins à l'exception de l'angle de basculement, l'angle de basculement ne présentant aucune part suivant le premier axe.

5. Dispositif d'éclairage (100) selon l'une des revendications précédentes,
dans lequel les angles de basculement sont prédéterminés de telle manière que le champ d'éclairage (124) présente un rapport de page désiré, en particulier de 4:3 ou 16:9.

6. Dispositif d'éclairage (100) selon l'une des revendications précédentes,
dans lequel est prévu un élément d'imagerie (130) qui forme l'image du champ d'éclairage (124) dans un plan focal commun derrière les sources lumineuses (106).

7. Dispositif d'éclairage (100) selon l'une des revendications précédentes, dans lequel les inégalités de l'élément de génération de motif (132) sont prévues de façon irrégulière et partout dans la région dans laquelle tombe le champ d'éclairage (124) afin d'éclairer, par des interférences, la région partielle rectangulaire de la zone de surveillance entièrement avec un motif d'éclairage (134) qui n'est pas semblable à lui-même.

8. Caméra de sécurité (10) en particulier caméra de sécurité stéréo tridimensionnelle, comprenant au moins un dispositif d'éclairage (100) selon l'une des revendications 1 à 7, qui comprend une sortie de sécurité (30) et une unité d'évaluation (22, 28), qui est réalisée pour reconnaître des interventions inadmissibles dans la zone de surveillance (12, 26) et délivrer ensuite un signal de coupure via la sortie de sécurité (30).

9. Caméra de sécurité selon la revendication 8,
dans laquelle l'unité d'évaluation (22) est réalisée pour l'application d'un algorithme stéréo, dans lequel des zones partielles mutuellement associées des images prises par la caméra stéréo (10) parmi les deux caméras (14a-b, 16a-b), et leur écartement est calculé au moyen de la disparité.

10. Procédé pour l'éclairage d'une zone de surveillance (12), dans lequel des faisceaux lumineux (108), émis depuis une pluralité de sources lumineuses (106) agencées sur au moins une ligne, en particulier depuis au moins un barreau à laser (104), sont collimatés dans un champ de micro-lentilles (110) avec une pluralité de lentilles (118), suivant un premier axe, afin de générer ainsi au moins une ligne d'éclairage (112),
dans lequel la ligne d'éclairage (112) est tirée suivant un second axe perpendiculaire au premier axe, par basculement de deux lentilles respectivement voisines (118) dans le champ de micro-lentilles (110) l'une par rapport à l'autre, à raison d'un angle de basculement constant de 0,1° à 1°, ou au moyen d'un champ de prismes (126), associés au champ de micro-lentilles (110a) avec un élément de déflexion optique (128) pour chaque lentille (118), dans lequel les éléments de déflexion optique (128) sont basculés les uns par rapport aux autres à raison de l'angle de basculement, ou deux éléments de déflexion respectivement voisins présentent des angles de coin différents à raison de l'angle de basculement constant,
dans lequel, en raison du tirage, il apparaît un champ d'éclairage qui tombe sur un élément de génération de motif (132), afin d'éclairer ainsi la zone de surveillance (124) dans une zone partielle sensiblement rectangulaire, avec un motif d'éclairage structuré (134), et l'élément de génération de motif (132) comprend un élément de phase optique avec des inégalités, qui engendrent des différences de phase locales entre les parts de lumière voisines qui tombent sur l'élément de phase (132).

11. Procédé selon la revendication 10,
dans lequel l'extension longitudinale de la ligne d'éclairage (112) en direction du premier axe est réglée par la courbure des lentilles (118) du champ de micro-lentilles (110), et l'extension transversale du champ d'éclairage (124) en direction du second axe est réglée par l'angle de basculement ou par un angle différent de l'angle de déflexion de deux éléments de déflexion optique voisins (128) du champ de prisme (126), et on établit ainsi en particulier un rapport de page souhaité du champ d'éclairage (124) de 4:3 ou 16:9.

12. Procédé de prise d'images stéréoscopiques pour engendrer une carte de profondeur à forte résolution d'une scène dans une zone de surveillance (12), dans lequel la zone de surveillance (12) est éclairée avec un procédé selon la revendication 10 ou 11.

13. Procédé pour la surveillance tridimensionnelle et de façon sûre d'une zone de l'espace (12), dans lequel une carte de profondeur à forte résolution générée avec un procédé de prise d'images selon la revendication 12 est évaluée vis-à-vis d'interventions inadmissibles, et quand une intervention inadmissible est reconnue, on délivre un signal de coupure à une source de danger (24).
